## Europäisches Patentamt

## European Patent Office

## Office européen des brevets

(19)

(11) Publication number: **0 110 712**
**B1**

(12)

# EUROPEAN PATENT SPECIFICATION

(45) Date of publication of patent specification: **08.04.87**

(51) Int. Cl.⁴: **C 04 B 35/10, H 01 M 10/39**

(21) Application number: **83307281.2**

(22) Date of filing: **30.11.83**

(54) Sodium beta alumina electrolyte elements and their manufacture.

(30) Priority: **06.12.82 GB 8234759**

(43) Date of publication of application:
**13.06.84 Bulletin 84/24**

(45) Publication of the grant of the patent:
**08.04.87 Bulletin 87/15**

(84) Designated Contracting States:
**DE FR**

(56) References cited:
FR-A-2 262 000
US-A-3 881 661
US-A-4 358 516

AMERICAN CERAMIC SOCIETY BULLETIN, vol.
57, no. 4, April 1978, pages 456-458, Columbus,
Ohio, US R.W. POWERS et al.: *"An effect of
furnace atmosphere on the sintering of beta
alumina"*

The file contains technical information
submitted after the application was filed and
not included in this specification

(73) Proprietor: **CHLORIDE SILENT POWER LIMITED**
**52 Grosvenor Gardens**
**London, SW1W 0AU (GB)**

(72) Inventor: **Heavens, Stephen Nicolas, Dr.**
**2 Maplewood Grove**
**Saughall Chester (GB)**

(74) Representative: **Cross, Rupert Edward Blount**
**et al**
**BOULT, WADE & TENNANT 27 Furnival Street**
**London EC4A 1PQ (GB)**

(56) References cited:
AMERICAN CERAMIC SOCIETY BULLETIN, vol.
58, no. 9, September 1979, pages 861-864,
Columbus, Ohio, US A.C. BUECHELE et al.:
"Microstructure and ionic resistivity of calcium-
containing sodium beta alumina"

SOLID STATE IONICS, vol. 5, October 1981,
pages 199-202, North-Holland Publishing
Company, Amsterdam, NL et al.: "Ionic
conductivity of Ca2+-Na+ and Ca2+ beta-
aluminas"

**0 110 712**

(56) References cited:

CHEMICAL ABSTRACTS, vol. 90, April 1979,
page 177, no. 124528f, Columbus, Ohio, US A.
CWEN: "Ceramics with sodium beta-alumina"

CHEMICAL ABSTRACTS, vol. 98, no. 14, April
1983, page 302, no. 112404q, Columbus, Ohio,
US L. VISWANATHAN et al.: "Transformation
toughening of beta-alumina by incorporation
of zirconia"

ELECTROCHIMICA ACTA, vol. 25, 1980, pages
613-616, Pergamon Press, GB M.W. BREITER et
al.: "Asymmetric behavior of beta-alumina"

## Description

Sodium beta alumina, commonly called beta alumina is a ceramic mixed oxide material which is ionically conductive for sodium ions. In many applications, for example in sodium sulphur cells, high conductivity is a desirable or necessary characteristic. The beta alumina is predominantly formed of sodium oxide ($Na_2O$) and alumina ($Al_2O_3$) and exists in two distinct phases $\beta$ and $\beta''$. In the $\beta$ or 2-block form, the spinel blocks in alternate planes are of mirror image form whereas, in the $\beta''$ or 3-block form, the orientation of the spinel blocks in successive planes are at angles such that the spinel block orientations are repeated in every third plane. The $\beta''$ phase has a much higher ionic conductivity than the $\beta$ phase and therefore, in making beta alumina electrolyte material for use where high conductivity is required, it is desirable to produce, as far as possible, the $\beta''$ phase. In general, the electrolyte will consist of at least 50% by weight of $\beta''$ alumina and preferably in excess of 80% by weight of $\beta''$ alumina, and more preferably in excess of 90% by weight of $\beta''$ alumina.

In order to produce $\beta''$ alumina, it is now known that a stabiliser, usually $Li_2O$ or MgO, should be included and also that the soda content ($Na_2O$) must be sufficient, typically above about 8% by weight. Present-day production techniques using sufficient soda and using a stabiliser produce a material which is a mixture of the $\beta$ and $\beta''$ phases and which will be referred to as $\beta/\beta''$ alumina. The proportion of the two phases and hence the ionic conductivity has been found to depend on the proportions of soda, alumina and stabiliser, and on the manufacturing or processing conditions. It is possible to vary the proportions of $\beta$ and $\beta''$ phases within certain limits by appropriate choice of chemical composition and of processing conditions, but such conditions are determined primarily by the requirement of obtaining a $\beta/\beta''$ alumina ceramic that possesses low porosity, high mechanical strength and resistance to environmental (atmospheric) attack.

We have found that, for a given chemical composition and given processing conditions, the presence of calcium as an impurity in $\beta/\beta''$ alumina causes a decrease in the ionic conductivity which is, in part, attributable to a decrease in the proportion of $\beta''$ to $\beta$ phase. This effect of calcium on the ratio of $\beta$ to $\beta''$ alumina occurs at very low calcium levels and is to be distinguished from the effect of calcium addition in relatively large quantities to single phase $\beta$ alumina causing reduced conductivity as reported in the paper "Production of $\beta$ $Al_2O_3$ Electrolyte" by I. W. Jones and L. J. Miles, Proc. Brit. Ceram. Soc. 1971 No. 19 pages 161—178, and by A. C. Buechele and L. C. de Jonghe in "Microstructure and Ionic Resistivity of Calcium-Containing Sodium Beta Alumina" Ceramic Bulletin Vol. 58 No. 9 (1979) pages 861—864. It is known to toughen or strengthen $\beta/\beta''$ alumina by the addition of zirconia stabilised in the tetragonal form by rare earth oxides; see for example U.S. 4358516. This technique however leads to a substantial increase in resistivity.

The present invention is concerned with obtaining high conductivity in the two phases $\beta/\beta''$ electrolyte material and with overcoming the deleterious effects of impurities, notably calcium, therein. In such material, the presence of calcium, even in very small quantities, such as 100 ppm by weight, will cause a significant increase in resistivity of the electrolyte and will also cause degradation of resistance stability of the electrolyte when used in a sodium sulphur cell.

One way of obtaining a higher proportion of $\beta''$ alumina and a higher conductivity in $\beta/\beta''$ material would be to eliminate any calcium; this however requires not only high purity and therefore expensive starting materials but also requires prevention of any contamination of the material during the grinding and other manufacturing operations. The present invention is directed more particularly to the reduction or elimination, during manufacture, of the adverse effects of calcium on the $\beta''$ to $\beta$ ratio, the conductivity and the resistance stability of $\beta/\beta''$ alumina.

According to one aspect of the present invention, in the production of a $\beta/\beta''$ alumina electrolyte element by sintering finely powdered $\beta/\beta''$ alumina or precursor material comprising alumina, soda and a stabiliser, which stabiliser comprises lithia and/or magnesia, or materials which provide on heating the alumina, soda and stabiliser, there is included in the mixture before sintering, finely divided monoclinic zirconia, whereby during subsequent sintering, calcia is dissolved in the zirconia forming stabilised cubic or tetragonal phase zirconia as a discrete phase in a $\beta/\beta''$ alumina matrix, the amount of zirconia added being sufficient to dissolve substantially all the calcium present in the mixture being sintered.

The resultant zirconia phase remains as a discrete second phase in the $\beta/\beta''$ alumina matrix, thereby removing the calcium from the conduction planes and grain boundaries of the $\beta/\beta''$ alumina. This described mechanism has been shown by electron microprobe analysis to occur in $\beta/\beta''$ alumina containing several percent by weight of zirconia. At low levels of zirconia addition the mechanism could not be verified by direct observation, but it is clear from electrical resistivity measurements that an interaction between zirconia and calcia is present in sintered $\beta/\beta''$ alumina ceramics even at very low levels of zirconia addition. For the purposes of enhancing electrolyte conductivity it is only necessary to add sufficient zirconia to overcome the deleterious effects of the calcium present. Using commercial grade materials for making the mixture, the amount of zirconia required might be 0.1 to 25% by weight of the total weight of material being sintered, but, as zirconia is a non-conductor, an excess is undesirable and 0.1 to 15% by weight is preferred and more preferably 0.1 to 3%. The above-described technique can beneficially be used with $\beta/\beta''$ alumina containing 10 to 1000 ppm by weight (measured as calcia) of calcium impurity, enabling a ceramic to be produced predominantly in the $\beta''$ phase rather than in the $\beta$ phase. Typically a proportion of 80% by weight of the $\beta''$ phase may be obtained.

The zirconia may be added as powdered zirconium oxide ($ZrO_2$) or as a zirconium compound which produces $ZrO_2$ on heating. $ZrO_2$ is a polymorphic material which normally exists at room temperature in a monoclinic form. At high temperatures, the monoclinic form is transformed first to a tetragonal form and then to a cubic form. The tetragonal and cubic forms are stabilised by dissolution of calcia so that these crystalline forms are retained on cooling. Whether the tetragonal or cubic form is produced will depend, inter alia, on the temperature employed for sintering the beta alumina but, at the temperatures normally employed, it is to be expected that the tetragonal form will predominate. However both the cubic and tetragonal forms will retain the calcia in solution on cooling and will remain as a discrete phase within the $\beta/\beta''$ matrix. The addition of the zirconia thus serves to prevent any calcium which may be present in the original mixture from affecting the proportion of $\beta''$ alumina to $\beta$ alumina in the final product.

The amount of zirconia added (typically 0.1 to 3% by weight) should be chosen to be sufficient to eliminate the effects of all the calcium which might be present. The addition of the small quantity of zirconia required to eliminate the effects of calcium impurities has been found to give a significant improvement in the ionic conductivity of $\beta/\beta''$ alumina due in part to the enhancement of the ratio of the $\beta''$ to $\beta$ alumina. An increase, for example, from 50% to 80% in the proportion of $\beta''$ to $\beta$ alumina causes a large increase in conductivity since the conductivity of $\beta''$ alumina, measured on a single crystal, is many times, possibly 20 times, that of $\beta$ alumina.

The invention furthermore includes within its scope a $\beta/\beta''$ alumina electrolyte element containing at least 50% by weight of $\beta''$ alumina and containing zirconia (preferably 0.1 to 3% by weight of zirconia) dispersed as a second phase in a matrix of $\beta/\beta''$ alumina, at least some of the zirconia being of cubic or tetragonal phase stabilised by dissolved calcia.

The following experimental results demonstrate the benefits obtained by adding a small quantity of zirconia to the powdered mixture before firing in the production of $\beta/\beta''$ alumina ceramic electrolyte material. Examples 1, 3, 5, 8, 11, 17 and 19 below are for comparison purposes only and are not examples of the invention.

Examples 1—9

These examples 1 to 9 are set out in Table 1 below. In each of examples 1 to 7 a mixture was made of finely powdered oxide material of composition, by weight, of 8.6% $Na_2O$, 1.0% $MgO$, 0.5% $Li_2O$, balance $Al_2O_3$. The source alumina powder, commercially available under the trademark "Alcoa A16SG superground", was found by chemical analysis to contain in the region of 100—200 ppm CaO.

The mixed powdered material was slurry-solution spray-dried, isostatically pressed into the form of a tube and then fired using a zone sintering furnace as described in U.K. Patent Specifications 1297373, 1375167, 1458221 and 1458222.

The chemical analyses disclosed in the examples listed in Table 1 refer to the CaO content of the tube after firing and annealing in the known way. The electrical resistivity of the sintered material was measured after firing and annealing. In examples 1 and 2 an extra grinding operation was incorporated into the powder preparation process and the presence of calcia in these examples substantially in excess of that in the source alumina indicates that extra calcia had been absorbed by the powder during the process.

In examples 1, 3 and 5 no zirconia was added. These examples are for comparison purposes only.

In examples 2, 4, 6 and 7 monoclinic zirconia powder was mixed with the precursor powder prior to spray-drying. The proportion of added zirconia was 0.15% or 0.20% by weight. These examples serve to illustrate the present invention.

TABLE 1

| Example | Firing method | Fired density (g/cm$^3$) | CaO impurity ppm | ZrO$_2$ addition W/O | % β'' in β/β'' phase | Resistivity at 350°C (ohm cm) |
|---|---|---|---|---|---|---|
| 1 | zone | 3.216 | 525 | 0 | 56 | 7.9 |
| 2 | zone | 3.206 | 550 | 0.2 | 60 | 5.9 |
| 3 | zone | 3.215 | 200 | 0 | 60 | 6.3 |
| 4 | zone | 3.196 | 200 | 0.2 | 68 | 4.6 |
| 5 | zone | 3.207 | 160 | 0 | 62 | 6.2 |
| 6 | zone | 3.192 | 150 | 0.2 | 72 | 4.4 |
| 7 | zone | 3.217 | 100 | 0.15 | 66 | 4.7 |
| 8 | batch | 3.217 | 160 | 0 | 86 | |
| 9 | batch | 3.200 | 200 | 0.2 | 91 | 3.4 |

In examples 8 and 9 the tube forming process was identical to that in examples 1 to 7, but the tubes were sintered in an isothermal batch sintering furnace using a two-peak firing process as described in British Patent No. 1,558,305.

No zirconia was used in example 8, which is for comparison purposes only.

Examples 1 to 9 are listed in Table 1 wherein the proportion of β'' alumina in the β/β'' mixture was determined by X-ray powder diffractometry, and the electrical resistivity at 350°C, this temperature being the normal operating temperature of a sodium sulphur cell, was determined by means of a four-point direct current technique.

Comparison of examples 2, 4 and 6 with examples 1, 3 and 5 respectively indicates that in zone-sintered material of a given level of calcium impurity, the presence of 0.2 per cent by weight of zirconia results in an increase in the proportion of β'' alumina and a lowering of the resistivity at 350°C. Comparison of example 9 with example 8 also indicates an increase in the proportion of β'' alumina when zirconia is added.

Example 10

Early sodium sulphur cells, containing electrolyte of the composition 8.6% Na$_2$O, 1.0% MgO, 0.5% Li$_2$O, balance Al$_2$O$_3$ generally exhibited severe resistance increase following charge-discharge cycling. In these cells no zirconia was present in the electrolyte and the calcium oxide content was typically in the range 200—500 ppm. The rate of resistance increase in these cells ranged from 5% to 500% per 100 cycles of operation, the average being approximately 20% increase in resistance per 100 cycles.

In example 10, eighteen zone-sintered tubes of the composition 8.6% Na$_2$O, 1.0% MgO, 0.5% Li$_2$O, balance Al$_2$O$_3$ were assembled into sodium sulphur cells to function as electrolytes therein. It will be noted from Table 2 below that the electrolyte material had considerably less calcium oxide content than the material mentioned in the preceding paragraph but otherwise was of similar composition. The cell resistance of each of these cells was measured over a period of approximately 250 days or 800 charge-discharge cycles. The results are indicated in Table 2. The two cell types N and R are distinguished by different types of sulphur electrode, which have different resistivities. Within each cell type, the presence of added zirconia in the electrolyte, shown by the suffix "b" to the series No., results in a lowering of the cell resistance by approximately 15 per cent compared with the cells (suffix "a") without added zirconia.

TABLE 2

| Series | No. of cells | Cell type | ZrO$_2$ content (W/O) | CaO content ppm | Electrolyte resistivity (ohm cm) | Min cell resistance (m$\Omega$) | | % change in resistance per 100 cycles | |
|--------|--------------|-----------|----------------------|------------------|-----------------------------------|------|------|------|------|
| | | | | | | Mean | S.D. | Mean | S.D. |
| 1a | 3 | N | 0 | 160—200 | 6.2—6.3 | 22.1 | 1.1 | −0.78 | 0.12 |
| 1b | 4 | N | 0.2 | 150—200 | 4.4—4.6 | 19.3 | 1.2 | +0.38 | 1.91 |
| 2a | 6 | R | 0 | 160—200 | 6.2—6.3 | 17.2 | 0.4 | +0.15 | 0.35 |
| 2b | 5 | R | 0.15 | 100—200 | 4.7—5.0 | 14.7 | 0.7 | −0.99 | 0.44 |
| 1a+2a | 9 | N+R | 0 | 150—200 | | | | −0.16 | 0.54 |
| 1b+2b | 9 | N+R | 0.15—0.2 | 100—200 | | | | −0.38 | 1.41 |

S.D.=Standard deviation

The resistance stability of each cell was assessed by determining the percentage change per 100 cycles, between the cell's most recent or final resistance, and the initial resistance, namely the resistance after a few running-in cycles. In Table 2 it is observed that all cells had very stable resistances, the final resistance often being slightly lower than the starting resistance. The presence of zirconia in the electrolyte did not appear significantly to influence resistance stability, probably because the calcium content was sufficiently low in all cells. It is possible that the presence of zirconia may allow somewhat higher levels of calcium impurity to be tolerated, without encountering problems of resistance rise. The present example serves only to demonstrate that the presence of zirconia in the electrolyte does not adversely affect resistance stability.

Examples 11—16

In these examples, which are set out in Table 3 below, the effect of additions of zirconia at levels varying from zero to 3 per cent by weight on the electrolyte conductivity, ratio of β″ to β phase, and crystal lattice parameters was determined.

Beta/Beta″ alumina tubes were formed from the composition by weight 8.75% Na$_2$O, 0.75% Li$_2$O, balance Al$_2$O$_3$, using the method of electrophoretic deposition disclosed in U.S. Patent 3,881,661 and fired by means of the two-peak batch sintering method used in Examples 8 and 9. For example 11, a mixture was made of the finely powdered oxide material, which was then calcined to convert to β/β″ alumina powder and vibro-energy milled in water-free 1-pentanol with alumina grinding media. For a level of ZrO$_2$ addition of 0.3 per cent by weight, stabilised zirconia grinding media were used in place of alumina, the wear by abrasion of the grinding media providing the finely divided zirconia in the suspension. For levels of ZrO$_2$ addition greater than 0.3 per cent by weight, monoclinic ZrO$_2$ powder was added to the powder mix to make up the difference. Following electrophoretic deposition of the powder in the form of a tube, the deposit was allowed to dry and the green shape was sintered using the two peak firing process, with peak temperatures of 1470°C and 1640°C respectively.

In Table 3 the proportions of zirconia refer to the total amount of ZrO$_2$ present in the β/β″ alumina tube, and include the amount obtained from wear of the zirconia grinding media. In example 11 alumina grinding media were used in place of the zirconia; this example is for comparison purposes.

The resistivity measurements in Table 3 were made at room temperature by means of a 4-point AC technique.

TABLE 3

| Example | Weight % ZrO$_2$ added | Weight % CaO added | Fired density (g/cm$^3$) | % β'' in β/β'' phase | Resistivity at 20°C (kilohm cm) | Lattice parameter of β'' phase | |
|---|---|---|---|---|---|---|---|
| | | | | | | a | c |
| 11 | 0 | — | 3.123 | 83 | 0.73 | 5.6095 | 33.460 |
| 12 | 0.3 | — | 3.219 | 89 | 0.52 | 5.6101 | 33.454 |
| 13 | 0.6 | — | 3.225 | 88 | 0.45 | 5.6094 | 33.466 |
| 14 | 1.0 | — | 3.250 | 92 | 0.48 | 5.6099 | 33.457 |
| 15 | 2.0 | — | 3.262 | 92 | 0.47 | 5.6100 | 33.456 |
| 16 | 3.0 | — | 3.287 | 93 | 0.49 | 5.6101 | 33.455 |
| 17 | 0 | 0.1 | 3.150 | 85 | 0.80 | 5.6094 | 33.460 |
| 18 | 1.0 | 0.1 | 3.207 | 90 | 0.48 | 5.6098 | 33.459 |

In examples 11—16 it is observed that as the proportion of zirconia is increased from zero the proportion of β'' in the β/β'' alumina mixture increases and the electrical resistivity decreases. In particular, examples 13 to 16 exhibit reduced resistivity with the addition of monoclinic zirconia, compared to examples 11 and 12. At levels of ZrO$_2$ greater than approximately 1 per cent by weight there is substantially no further increase in the proportion of β'', and no further decrease in the electrical resistivity.

Examples 17—18

In these examples, which are set out in Table 3 above, tubes were formed by electrophoretic deposition and fired by the batch sintering method. Alumina grinding media were used in vibromilling the suspension, and calcia was deliberately added to the powder mix in order to demonstrate the deleterious effects of this impurity on the electrical resistivity of the ceramic and to demonstrate the effectiveness of added zirconia in counteracting such an effect.

In example 17 1000 ppm by weight of CaO was added; this example is for comparison purposes only. In example 18 1000 ppm by weight of CaO and 1 per cent by weight of monoclinic zirconia powder were added. This example serves to illustrate the present invention. The results listed in Table 3 indicate that addition of the zirconia powder results in a small increase in the proportion of β'' in the β/β'' alumina mixture and in a substantial decrease in the electrical resistivity.

The crystal lattice parameter measurements in Table 3, obtained by an accurate back-reflection X-ray diffraction technique, indicate that there is no significant change in the lattice parameters of the β'' alumina phase as the zirconia content is increased from zero to 3 per cent by weight. These measurements indicate that at all levels of addition the zirconia remains as a discrete second phase and does not dissolve into the β/β'' alumina matrix. Microstructural and SEM/EDAX (scanning electron microscope/energy dispersive analysis by X-rays) examination of similar material also indicate that the zirconia remains as a discrete second phase. Electron microprobe analysis showed that a high level of calcium was present in the zirconia phase, considerably higher than could be accounted for by impurities in the source zirconia. These observations provide direct confirmation that the zirconia has the desired effect of eliminating calcium from the β/β'' alumina phase.

Examples 19—21

In these examples a mixture was made of finely powdered oxide material of composition, by weight, of 8.0% Na$_2$O, 2.0% MgO, balance Al$_2$O$_3$. Beta/beta'' alumina tubes of this composition were formed and fired by means of the process described in Examples 1 to 7. The resistivity was measured at 300°C and 350°C by a 4 point direct current technique and the results are shown in Table 4. In example 19 no zirconia was added, this example is for comparison purposes only. The resistivities quoted in Table 4 for this example represent the minimum values obtained from a large number of tubes, namely 3 standard deviations below the mean.

TABLE 4

| Example | Weight % ZrO₂ added | Resistivity (ohm cm) | |
| --- | --- | --- | --- |
| | | 300°C | 350°C |
| 19 | 0.0 | 11.26 | 8.23 |
| 20 | 7.0 | 9.94 | 7.71 |
| 21 | 13.0 | 10.84 | 8.25 |

In examples 20 and 21, 7% by weight and 13% by weight respectively of monoclinic zirconia powder was added to the powder mix. Tubes were formed and fired in a manner identical to that in example 19. These examples serve to illustrate the invention. The values for resistivity quoted for examples 20 and 21, which are single measurements, indicate that a substantial reduction is resistivity may be obtained even when a relatively high proportion of zirconia is introduced.

**Claims**

1. A process for producing a β/β″ alumina electrolyte element by sintering finely powdered β/β″ alumina or precursor material comprising alumina, soda and a stabiliser which stabiliser comprises lithia and/or magnesia, or materials which provide, on heating, the alumina, soda and stabiliser, characterised in that there is included in the mixture, before sintering, finely divided monoclinic zirconia, whereby during subsequent sintering, calcia is dissolved in the zirconia forming stabilised cubic or tetragonal phase zirconia as a discrete phase in a β/β″ alumina matrix, the amount of zirconia added being sufficient to dissolve substantially all the calcium present in the mixture being sintered.

2. A process as claimed in claim 1 wherein the amount of zirconia is 0.1 to 25% by weight of the total weight of material sintered.

3. A process as claimed in claim 1 wherein the amount of zirconia is 0.1 to 15% by weight of the total weight of material sintered.

4. A process as claimed in claim 1 characterised in that the amount of zirconia is 0.1 to 3% by weight of the total weight of material sintered.

5. A process as claimed in any of the preceding claims characterised in that the mixture being sintered contains 10 to 1000 ppm by weight of calcium (measured as calcia) as an impurity.

6. A β/β″ alumina electrolyte element containing at least 50% by weight of β″ alumina and containing zirconia dispersed as a second phase in a matrix of β/β″ alumina, at least some of the zirconia being of cubic or tetragonal phase stabilised by dissolved calcia.

7. A β/β″ alumina electrolyte element as claimed in claim 6 wherein the amount of zirconia is 0.1 to 25% by weight of the weight of the element.

8. A β/β″ alumina electrolyte element as claimed in claim 6 wherein the amount of zirconia is 0.1 to 15% by weight of the weight of the element.

9. A β/β″ alumina electrolyte element as claimed in claim 6 characterised in that the amount of zirconia is 0.1 to 3% by weight of the weight of the element.

10. A β/β″ alumina electrolyte element as claimed in any of claims 6 to 9 and containing 10 to 1000 ppm by weight of calcium (measured as calcia) as an impurity.

11. A β/β″ alumina electrolyte element as claimed in any of claims 6 to 10 wherein substantially all the calcium present is dissolved in the zirconia.

12. A β/β″ alumina electrolyte element as claimed in any of claims 6 to 11 and comprising 80% β″ alumina by weight.

**Patentansprüche**

1. Verfahren zur Herstellung eines β/β″-Aluminiumoxidelektrolyt-Elementes durch Sintern von fein gepulvertem β/β″-Aluminiumoxid oder einem Vorläufermaterial, das aus Aluminiumoxid, Soda und einem Stabilisierungsmittel besteht, wobei das Stabilisierungsmittel Lithiumoxid und/oder Magnesiumoxid umfaßt, oder Materialien, die beim Erhitzen Aluminiumoxid, Soda und Stabilisierungsmittel bilden, dadurch gekennzeichnet, daß in der Mischung vor dem Sintern feinverteiltes monoklines Zirkoniumdioxid enthalten ist, wodurch während des nachfolgenden Sinterns das Calciumoxid aufgelöst wird in dem Zirkoniumdioxid unter Bildung einer stabilisierten kubischen oder tetragonalen Phase von Zirkoniumdioxid als diskreter Phase in einer β/β″-Aluminiumoxidmatrix, wobei die Menge an Zirkoniumdioxid, die zugegeben wird, ausreichend ist, um im wesentlichen alles vorhandene Calcium aufzulösen in der Mischung, die gesintert werden soll.

2. Verfahren nach Anspruch 1, dadurch gekennzeichnet, daß die Menge an Zirkoniumdioxid 0,1 bis 25 Gew.-%, bezogen auf das Gesamtgewicht des gesinterten Materials, beträgt.

3. Verfahren nach Anspruch 1, dadurch gekennzeichnet, daß die Menge an Zirkoniumdioxid 0,1 bis 15 Gew.-%, bezogen auf das Gesamtgewicht des gesinterten Materials, beträgt.

4. Verfahren nach Anspruch 1, dadurch gekennzeichnet, daß die Menge an Zirkoniumdioxid 0,1 bis 3 Gew.-%, bezogen auf das Gesamtgewicht an gesintertem Material, beträgt.

5. Verfahren nach einem der vorhergehenden Ansprüche, dadurch gekennzeichnet, daß die Mischung, die gesintert werden soll, 10 bis 1000 ppm, bezogen auf das Gewicht an Calcium (gemessen als Calciumoxid) als Verunreinigung enthält.

6. β/β''-Aluminiumoxidelektrolyt-Element, enthaltend mindestens 50 Gew.-% β''-Aluminiumoxid und enthaltend Zirkoniumdioxid dispergiert als zweite Phase in einer Matrix von β/β''-Aluminiumoxid, wobei mindestens etwas von dem Zirkoniumdioxid in kubischer oder tetragonaler Phase vorliegt, stabilisiert durch aufgelöstes Calciumoxid.

7. β/β''-Aluminiumoxidelektrolyt-Element nach Anspruch 6, dadurch gekennzeichnet, daß die Menge an Zirkoniumdioxid 0,1 bis 25 Gew.-%, bezogen auf das Gewicht des Elements, beträgt.

8. β/β''-Aluminiumoxidelektrolyt-Element nach Anspruch 6, dadurch gekennzeichnet, daß die Menge an Zirkoniumdioxid 0,1 bis 15 Gew.-%, bezogen auf das Gewicht des Elementes, beträgt.

9. β/β''-Aluminiumoxidelektrolyt-Element nach Anspruch 6, dadurch gekennzeichnet, daß die Menge an Zirkoniumdioxid 0,1 bis 3 Gew.-%, bezogen auf das Gewicht des Elementes, beträgt.

10. β/β''-Aluminiumoxidelektrolyt-Element nach einem der Ansprüche 6 bis 9, enthaltend 10 bis 1000 ppm, bezogen auf das Gewicht an Calcium (gemessen als Calciumoxid) als Verunreinigung.

11. β/β''-Aluminiumoxidelektrolyt-Element nach einem der Ansprüche 6 bis 10, dadurch gekennzeichnet, daß im wesentlichen alles vorhandene Calcium in dem Zirkoniumdioxid aufgelöst ist.

12. β/β''-Aluminiumoxidelektrolyt-Element nach einem der Ansprüche 6 bis 11, enthaltend 80 Gew.-% β''-Aluminiumoxid.

## Revendications

1. Procédé pour produire un élément d'électrolyte, ou pièce, en alumine bêta/bêta'' par frittage d'alumine bêta/bêta'' en poudre fine ou d'une matière comprenant de l'alumine, de la soude et un stabilisant qui en constitue le précurseur, ce stabilisant comprenant de l'oxyde de lithium et/ou de la magnésie, ou des matières qui fournissent, par chauffage, l'alumine, la soude et le stabilisant, procédé caractérisé en ce qu'on inclut dans le mélange avant le frittage, de l'oxyde de zirconium monoclinique finement divisé, de sorte que, pendant le frittage subséquent, de l'oxyde de calcium se dissout dans l'oxyde de zirconium en formant de l'oxyde de zirconium à phase cubique ou tétragonale stabilisé sous forme de phase séparée dans une matrice en alumine bêta/bêta'', la quantité d'oxyde de zirconium ajoutée étant suffisante pour dissoudre la quasi-totalité du calcium présent dans le mélange soumis à frittage.

2. Procédé selon la revendication 1, dans lequel la quantité de zirconium représente 0,1 à 25% en poids, par rapport au poids total de la matière frittée.

3. Procédé selon la revendication 1, dans lequel la quantité d'oxyde de zirconium représente 0,1 à 15% en poids, par rapport au poids total de la matière frittée.

4. Procédé selon la revendication 1, caractérisé en ce que la quantité d'oxyde de zirconium représente 0,1 à 3% en poids, par rapport au poids total de la matière frittée.

5. Procédé selon l'une quelconque des revendications précédentes, caractérisé en ce que le mélange soumis à frittage contient 10 à 1 000 ppm en poids de calcium (quantité mesurée en oxyde de calcium) comme impureté.

6. Elément en alumine bêta/bêta'', ou pièce, pour électrolyte, contenant au moins 50% en poids d'alumine bêta'' et contenant de l'oxyde de zirconium dispersé à titre de seconde phase dans une matrice d'alumine bêta/bêta'', au moins une partie de l'oxyde de zirconium étant en phase cubique ou tétragonale stabilisée par l'oxyde de calcium dissous.

7. Elément en alumine bêta/bêta'' pour électrolyte selon la revendication 6, dans lequel la quantité d'oxyde de zirconium représente 0,1 à 25% en poids, par rapport au poids de l'élément.

8. Elément en alumine bêta/bêta'' pour électrolyte, selon la revendication 6, dans lequel la quantité d'oxyde de zirconium représente de 0,1 à 15% en poids, par rapport au poids de l'élément.

9. Elément en alumine bêta/bêta'' pour électrolyte selon la revendication 6, caractérisé en ce que la quantité d'oxyde de zirconium représente 0,1 à 3% en poids, par rapport au poids de l'élément.

10. Elément en alumine bêta/bêta'' pour électrolyte selon l'une quelconque des revendications 6 à 9, et contenant 10 à 1 000 ppm (parties par million) en poids de calcium (proportion mesurée en oxyde de calcium) à titre d'impureté.

11. Elément en alumine bêta/bêta'' pour électrolyte selon l'une quelconque des revendications 6 à 10, dans lequel la quasitotalité du calcium présent est dissous dans l'oxyde de zirconium.

12. Elément en alumine bêta/bêta'' pour électrolyte selon l'une quelconque des revendications 6 à 11, et qui comprend 80% en poids d'alumine bêta''.